# EUROPÄISCHE PATENTSCHRIFT

(11) **EP 2 095 184 B1**
(45) Veröffentlichungstag und Bekanntmachung des Hinweises auf die Patenterteilung: **01.01.2020**
(21) Anmeldenummer: 07819697.9
(22) Anmeldetag: 08.11.2007
(51) Int. Cl.: G03B 21/00, H04N 9/31

(54) **PROJEKTIONS-VORRICHTUNG MIT VERBESSERTER PROJEKTIONSEIGENSCHAFT**
PROJECTION APPARATUS HAVING IMPROVED PROJECTION PROPERTIES
DISPOSITIF DE PROJECTION AYANT UNE PROPRIÉTÉ DE PROJECTION AMÉLIORÉE

(30) Priorität: 14.11.2006 DE 102006053639; 31.05.2007 DE 102007025330
(43) Veröffentlichungstag der Anmeldung: 02.09.2009
(73) Patentinhaber: OSRAM GmbH, 80807 München (DE)
(72) Erfinder: DRUMM, Jan, Oliver, 93049 Regensburg (DE); REHN, Henning, 13407 Berlin (DE); LANCHAVA, Bakuri, 93049 Regensburg (DE); PABST, Wolfgang, 82041 Deisenhofen (DE); KRAUS, Robert, 93051 Regensburg (DE)
(74) Vertreter: Schulze, Mark
(86) Internationale Anmeldenummer: PCT/EP2007/009688
(87) Internationale Veröffentlichungsnummer: WO 2008/058671

(56) Entgegenhaltungen:
- EP-A- 0 140 508
- EP-A- 0 390 969
- US-A- 4 684 996
- US-A- 4 689 482
- US-A- 4 827 436
- US-A- 5 729 245
- US-A- 6 091 461
- US-A1- 2003 015 652
- US-A1- 2003 122 972
- US-A1- 2003 123 031
- US-A1- 2004 263 802
- US-A1- 2005 140 832
- US-A1- 2005 168 728
- US-A1- 2006 227 087
- US-B1- 6 424 412

## Beschreibung

Die Erfindung betrifft eine Projektions-Vorrichtung und ein Verfahren zur Projektion mit verbesserter Projektionseigenschaft.

In Geräten zur Projektion von Bildern werden für jeden Bildpunkt mehrere Strahlen überlagert und auf eine Projektionsfläche projiziert. im Idealfall entsteht dabei auf der Projektionsfläche ein einzelner Spot, der sich aus den Farben der Strahlen zusammensetzt. In einem so genannten "Flying-Spot-Verfahren" werden die Strahlen vor der Projektionsfläche über einen beweglichen Spiegel gelenkt, mit dem man durch geeignete Bewegung ein Bild auf der Projektionsfläche erzeugen kann. Fertigungsbedingte, minimale Winkelabweichungen der überlagerten Strahlen führen auf der Projektionsfläche zu einer Deckungsungleichheit der einzelnen Spots, die Farbstörungen des Projektionsbildes verursacht. Durch thermischen Stress kann sich die Abweichung der einzelnen Spots voneinander auch während des Betriebs ändern.

US 2006/227087 A1 offenbart Laseranzeigesysteme, die mindestens einen Scan-Laserstrahl verwenden, um ein oder mehrere fluoreszierende Materialien auf einem Bildschirm anzuregen, die Licht emittieren, um Bilder zu erzeugen. Die fluoreszierenden Materialien können Phosphormaterialien umfassen.

US 6 424 412 B1 offenbart ein System zum Erfassen von Abweichungen von einer optischen Achse eines oder mehrerer einzelner Komponentenstrahlen, die mehreren Laserstrahlen zugeordnet sind. Das System umfasst einen ersten Mechanismus, der selektiv einzelne Komponentenstrahlen von mehreren Laserstrahlen isoliert und die einzelnen Komponentenstrahlen als Reaktion darauf bereitstellt. Ein zweiter Mechanismus detektiert Abweichungen von einer gewünschten optischen Achse der einzelnen Komponentenstrahlen, die von dem ersten Mechanismus ausgegeben werden. In einer Ausführungsform umfasst das System ferner einen Mechanismus, der automatisch die erfassten Abweichungen jedes Komponentenstrahls der mehreren Strahlen korrigiert. Eine Strahlaufnahmevorrichtung, wie zum Beispiel ein Strahlteiler, lenkt einen Probestrahl der Vielzahl von Strahlen um, die mehrere getrennte Strahlen eines Farbrads darstellen. Die einzelnen Strahlen umfassen rote, grüne und blaue Laserstrahlen. Das Farbrad isoliert selektiv die roten, grünen und/oder blauen Strahlen stellt als Antwort darauf einen isolierten Komponentenstrahl bereit. Ein Strahlteiler spaltet den isolierten Komponentenstrahl in einen ersten Teilstrahl und einen zweiten Teilstrahl auf und lenkt den ersten Teilstrahl und den zweiten Teilstrahl entlang eines ersten optischen Weges, der an einem ersten Detektor endet, und eines zweiten optischen Weges, der an einem zweiten Detektor endet. Die Längen der ersten und zweiten optischen Wege unterscheiden sich um eine vorbestimmte Entfernung. Software, die auf einem Computer läuft, vergleicht die relative Position des ersten Teilstrahls auf dem ersten Detektor mit der Position des zweiten Teilstrahls auf dem zweiten Detektor unter Bezugnahme auf die vorbestimmte Entfernung und liefert als Antwort darauf ein Strahlabweichungssignal. Die Software betätigt dann ein Strahlabweichungskorrektursystem, um Strahlabweichungen zu korrigieren, die durch das Strahlabweichungssignal angezeigt werden, das dem isolierten Strahl in den mehreren Strahlen zugeordnet ist.

US 2003/123031 A1 offenbart ein Drei-Farben-Ausrichtungssystem mit geschlossener Regelschleife für einen digitalen Projektor. Das System umfasst eine Lichtquelle und eine optische Vorrichtung, die einen Lichtstrahl von der Lichtquelle in erste, zweite und dritte Wellenlängenbänder aufteilt.

Ein erster, zweiter und dritter räumlicher Lichtmodulator übermittelt zu dem ersten, zweiten und dritten Wellenlängenband Bilddaten und erste, zweite und dritte Bezugsdaten. Ein Kombinierer kombiniert die modulierten ersten, zweiten und dritten Wellenlängenbänder. Ein Ablenker lenkt einen Teil der kombinierten modulierten Wellenlängenbänder auf einen Sensor ab. Der Sensor erfasst eine relative Position von jedem der Bezugspunkte und sendet die Positionsinformation an einen Mikroprozessor. Der Mikroprozessor bestimmt dann einen Fehler basierend auf der relativen Position der Bezugsmarkierungen. Der Mikroprozessor sendet dann ein Signal an mindestens eine Komponente des Systems, um den Fehler zu beheben.

US 2005/168728 A1 offenbart ein Verfahren und eine Vorrichtung, um Variationen in der Ausrichtung einer Vielzahl von Lasern zu kompensieren. Eine Steuerung variiert die Zeit, zu der die Laser angeregt werden, so dass das von ihnen emittierte Laserlicht zu unterschiedlichen Zeiten von einem Abtastspiegel reflektiert wird, so dass jeder der Lichtstrahlen entlang eines im Wesentlichen gemeinsamen Pfads reflektiert und auf einen im Wesentlichen gemeinsamen Punkt gerichtet wird.

US 2003/122972 A1 offenbart einen digitalen Projektor, der eine Farbausrichtung mit drei geschlossenen Regelkreisen aufweist, umfassend eine Lichtquelle, wobei eine optische Vorrichtung einen Lichtstrahl von der Lichtquelle in erste, zweite und dritte Wellenlängenbänder aufteilt. Ein erster, zweiter und dritter räumlicher Lichtmodulator übermittelt dem ersten, zweiten und dritten Wellenlängenband jeweils Bilddaten und erste, zweite und dritte Bezugsdaten. Die ersten, zweiten und dritten Wellenlängenbänder sind jeweils auf den ersten, zweiten und dritten räumlichen Lichtmodulator gerichtet. Ein Kombinierer kombiniert die modulierten ersten, zweiten und dritten Wellenlängenbänder. Ein Umlenker leitet einen Teil der kombinierten modulierten Wellenlängenbänder zu mindestens einem Sensor um. Der Sensor erfasst dann eine relative Position der Bezugsmarken und sendet die Positionsinformation an einen Mikroprozessor. Der Mikroprozessor bestimmt dann einen Fehler basierend auf der relativen Position der Bezugsmarkierungen. Der Mikroprozessor sendet ein Signal an mindestens eine Komponente des Systems, um den Fehler zu beheben.

EP 0 140 508 A1 offenbart ein Verfahren zum Vereinigen von Laserstrahlen, umfassend die Schritte: Durchlassen von zwei oder mehr Laserstrahlen durch jeweilige Richtungskorrekturmittel zum Einstellen der Richtung der Laserstrahlen; Zusammenführen der Laserstrahlen im Wesentlichen zu einem einzigen Laserstrahl durch ein optisches Vereinigungsmittel; Extrahieren eines Teils des vereinigten Laserstrahls und Hindurchleiten durch eine Linse mit positiver Stärke und Auftreffen auf ein Loch, das in der Brennweite der Linse angeordnet ist; Erfassen des Betrags des Laserstrahls, der durch das Loch hindurchgeht, durch einen Fotodetektor; Erfassen der Richtungen der jeweiligen Laserstrahlen, in denen die Menge des durch das Loch hindurchtretenden Laserstrahls durch Betätigen der Richtungskorrekturmittel maximal wird; und Einstellen der Laserstrahlen jeweils in den erfassten Richtungen.

Aufgabe der Erfindung ist es, eine Methode zur Projektion einer Abbildung bereitzustellen, die sich durch eine verbesserte Projektionseigenschaft auszeichnet und somit die oben genannten Nachteile vermindert.

Diese Aufgabe wird durch eine Methode zur Projektion einer Abbildung gemäß dem Anspruch 1 gelöst. Besonders vorteilhafte Ausgestaltungen und eine Projektionsvorrichtung sind Gegenstand weiterer Ansprüche.

Bei der Methode wird eine Abbildung mittels der Projektion zumindest eines ersten und zweiten Strahls auf eine Projektionsfläche erzeugt, wobei durch die Überlagerung der Projektion des ersten und zweiten Strahls auf die Projektionsfläche ein Soll-Eindruck der Abbildung erzeugt werden soll. Eine tatsächliche Abweichung der Projektion des zumindest ersten und zweiten Strahls auf die Projektionsfläche erzeugt jedoch einen von dem Soll-Eindruck abweichenden Ist-Eindruck. Die Methode hat die Verfahrensschritte A) Ermittlung der tatsächlichen Abweichung der Projektion des ersten von dem zweiten Strahl auf der Projektionsflache, und B) zeitliche Intensitätsvariation des ersten und/oder zweiten Strahls nach dem in Verfahrensschritt A) ermittelten Abweichungen zur Erzeugung des Soll-Eindrucks. Dies ergibt den Vorteil, dass die Bildqualität des Projektors verbessert wird. Zudem können die Produktionskosten gesenkt werden, da im Vergleich zu bisher bestehenden Systemen die Fertigungstoleranzen geringer gehalten werden können. Des Weiteren wird durch die Selbstkalibrierung der Position der Projektion auf die Projektionsfläche die Langzeitstabilität des Projektors erheblich gesteigert. Die Methode führt zu einer exakteren Überlagerung der Strahlen und somit zu einer verbesserten Farb- und Bildqualität.

Ein weiteres Merkmal der Methode ist ein erster Spiegel, der den zumindest ersten und zweiten Strahl zur Projektion der Bildpunkte auf die Projektionsfläche lenkt. Vorteilhafterweise ist dieser erste Spiegel beweglich. Dies hat zum Vorteil, dass durch geeignete Bewegung des ersten Spiegels ein Bild auf der Projektionsebene erzeugt wird.

Vorteilhafterweise wird dieser erste Spiegel elektronisch angesteuert. Der Vorteil dabei ist, dass durch die elektronische Ansteuerung die Bewegung des Spiegels gegebenenfalls moduliert werden kann.

Ferner ist zur Durchführung des Verfahrensschrittes A) zwischen dem ersten Spiegel und der Projektionsfläche ein zweiter Spiegel positioniert. Dabei ist jeweils nur ein einzelner Strahl in Betrieb. Dieser zweite Spiegel hat zum Vorteil, dass er den Strahl, der gerade in Betrieb ist, von der Projektionsfläche wegleiten kann. Diese Ableitung von der Projektionsfläche kann mit jedem der Strahlen durchgeführt werden.

Außerdem wird der zweite Spiegel so positioniert, dass er den jeweiligen Strahl, der gerade in Betrieb ist, zumindest teilweise auf einen Detektor mit feststehender Position lenkt. Das hat zum Vorteil, dass die Position der Projektion des Strahls, der gerade in Betrieb ist, auf dem Detektor gemessen werden kann. Ein Teil des Strahles kann jedoch weiterhin auf der Projektionsfläche beobachtet werden. Vorteilhafterweise erzeugt der Strahl, der gerade in Betrieb ist, auf dem Detektor, auf den er gelenkt wird, eine Projektion.

Weiterhin kann die Methode das vorteilhafte Merkmal haben, dass als erster und zweiter Strahl Laserstrahlen verwendet werden. Der Wellenlängenbereich der Laserstrahlen umfasst dabei vorteilhafterweise einen roten, grünen oder blauen Spektralbereich. Die Verwendung von Laserstrahlen ist vorteilhaft, weil mit ihnen ein besonders exaktes Bild mit definierten Farbmischungen erzeugt werden kann. Die Wahl der Spektralbereiche rot, grün und blau hat den Vorteil, dass das gesamte Farbspektrum dargestellt werden kann.

Weiterhin kann der zumindest erste und zweite Strahl jeweils eine erste und zweite Intensität aufweisen, die durch ein zumindest erstes und zweites elektronische« Signal erzeugt wird. Der Vorteil dabei ist, dass durch eine geeignete Mischung der Intensitäten eine Vielzahl an Farben erzeugt werden kann. Je schwächer die Intensität einer Farbe ist, desto stärker kommt der Farbton der anderen Strahlen hervor, Dadurch kann jeder Projektionspunkt auf der Projektionsfläche individuell gestaltet werden.

Vorteilhafterweise weist die Methode zur Projektion einer Abbildung verschiedene Ausführungsformen auf, die sich darin unterscheiden, ob die Verfahrensschritte A) und B) vor oder während des Projektionsbetriebs durchgeführt werden. Weiterhin gibt es für beide Varianten die Möglichkeit, den Verfahrensschritt A) durchzuführen, indem der erste Spiegel eine variable Orientierung aufweist oder indem der erste Spiegel eine feststehende Orientierung aufweist.

Vorteilhafterweise wird als zweiter Spiegel ein semi-transparenter Spiegel oder ein Umlenkspiegel verwendet. Ein semi-transparenter Spiegel hat zum Vorteil, dass er den Strahl, der gerade in Betrieb ist, nur teilweise von der Projektionsfläche weglenkt, einen anderen Teil des Strahls jedoch weiterhin auf die Projektionsfläche aufkommen lässt. Es ist jedoch auch möglich, einen nicht-transparenten zweiten Spiegel einzusetzen, da in dieser Ausführungsform der Erfindung der Verfahrensschritt A) vor dem eigentlichen Projektions-Betrieb durchgeführt wird. Mit anderen Worten ist eine zumindest teilweise Projektion des Strahls auf die Projektionsfläche während des Verfahrensschrittes A) in dieser Ausführungsform der Erfindung nicht notwendig.

Günstigerweise wird der jeweilige Strahl, der in Betrieb ist, mittels einer vor dem Detektor vorhandenen Linse fokussiert, Das hat zum Vorteil, dass die Breite des Strahles, die aus technischen Gründen gegeben ist, auf einen kleinen Punkt fokussiert werden kann. Der Vorteil dabei ist, dass die Detektion der Position der Projektion des Strahls genauer durchgeführt werden kann.

Darüber hinaus wird der erste Spiegel für den ersten Strahl in eine erste Orientierung gebracht, bei der am Detektor eine maximale Intensität des ersten Strahls gemessen wird. Dabei wird der erste Spiegel auch für den zweiten Strahl in eine zweite Orientierung gebracht, bei der am Detektor eine maximale Intensität des zweiten Strahls gemessen wird. Der Vorteil dabei ist, dass man für jeden Strahl eine definierte Orientierung des ersten Spiegels erhält, die mit der Position der Projektion des Strahls auf dem Detektor in Verbindung gebracht werden kann. Um noch genauere Ergebnisse zu erhalten, kann für den ersten Spiegel für den ersten Strahl eine dritte Orientierung des ersten Spiegels zu messen, bei der der erste Strahl auf einem zweiten Detektor maximale Intensität aufweist. Ebenso wird für den zweiten Strahl eine vierte Orientierung des ersten Spiegels gemessen, bei der der zweite Strahl auf einem zweiten Detektor eine maximale Intensität aufweist. Das hat zum Vorteil, dass man sowohl für den ersten als auch für den zweiten Strahl weitere Orientierungen des Spiegels erhält die mit der Position der Projektion der Strahlen auf einem zweiten Detektor in Verbindung gebracht werden können.

Nach der Ermittlung der Spiegelorientierungen für jeden Strahl, ist es vorteilhaft, die Abweichung der Strahlen voneinander mittels der Differenz der Spiegelorientierungen zu bestimmen. Dazu ist es günstig, mit einem geeigneten Verfahren die Spiegelorientierungen zu messen.

Ferner wird die erste und zweite Orientierung des ersten Spiegels jeweils dadurch bestimmt werden, dass der erste Spiegel mit einem zusätzlichen Strahl bestrahlt wird, und dessen Ablenkung mittels eines zweiten Detektors ermittelt wird. Dabei wird die Orientierung des ersten Spiegels durch die Ablenkung des zusätzlichen Strahls ermittelt. Vorteilhafterweise ist der zusätzliche Strahl unter einem geneigten Winkel zu dem zumindest ersten und zweiten Strahl angeordnet. Diese Messmethode zur Orientierung des Spiegels hat zum Vorteil, dass sie für den übrigen Projektionsbetrieb störungsfrei verläuft.

Darüber hinaus wird aus der ersten und zweiten Orientierung des ersten Spiegels eine Winkelabweichung zwischen dem ersten und zweiten Strahl ermittelt. Die ermittelte Winkelabweichung dient zur Ermittlung der tatsächlichen Abweichung zwischen dem ersten und zweiten Strahl auf der Projektionsfläche. Das hat zum Vorteil, dass über die Messung der Orientierungen des Spiegels für den jeweiligen Strahl die Winkelabweichung berechnet werden kann und damit die Abweichung der Strahlen voneinander auf der Projektionsflache ermittelt werden können, ohne sie direkt zu messen.

In einer weiteren Ausführungsform ist es vorteilhaft, zur Ermittlung der Position der Projektion der Strahlen auf dem Detektor eine Vielzahl von Detektoren, einen sog. Detektorarray einzusetzen. Vorteilhafterweise handelt es sich dabei um eine im Wesentlichen zweidimensionale Matrix aus Detektoren, beispielsweise eine CCD (Charge Coupled Device) Array. Dabei ist es vorteilhaft, wenn die Vielzahl von Detektoren so positioniert wird, dass alle Positionen der Projektionen der Strahlen auf der Vielzahl von Detektoren gemessen werden können. Das hat zum Vorteil, dass eine Bewegung des Detektors zur Erfassung alle Projektionen der Strahlen auf dem Detektor nicht mehr nötig ist.

Vorteilhafterweise wird der jeweilige Strahl, der in Betrieb ist, mittels einer vor der Vielzahl von Detektoren vorhandenen Linse fokussiert. Das hat zum Vorteil, dass die Breite des Strahls, die aus technischen Gründen entsteht, minimiert wird, und so die Detektion der Position der Projektion des Strahls genauer wird.

Günstigerweise wird aus den Positionen der Projektion der Strahlen auf der Vielzahl von Detektoren eine Winkelabweichung zwischen ersten und zweiten Strahl ermittelt. Die ermittelte Winkelabweichung wird dazu verwendet, die tatsächliche Abweichung des ersten und zweiten Strahls auf der Projektionsfläche zu ermitteln. Das hat zum Vorteil, dass die Position der Projektionen der Strahlen auf der Projektionsfläche ermittelt werden können, ohne sie direkt auf der Projektionsfläche zu messen. Die Messung erfolgt über die Messung der Position der Projektion der Strahlen auf dem Detektor.

In einer weiteren vorteilhaften Ausführungsform der Erfindung ist es ein vorteilhaftes Merkmal, dass ein dritter Stahl vorhanden ist, dessen Abweichung vom ersten und/oder zweiten Strahl nach der oben beschriebenen Methode und den verschiedenen Ausgestaltungen ermittelt wird. Die Verwendung eines dritten Strahls hat zum Vorteil, dass das Spektrum der Farben, die durch die Strahlen dargestellt werden können, erheblich erweitert wird. Werden drei Strahlen verwendet und umfassen diese die drei Primärfarben rot, blau und grün, kann vorteilhafterweise eine vollfarbige Projektion der Abbildung erreicht werden.

Weiterhin ist es vorteilhaft, wenn die Vielzahl von Detektoren eine feststehende Position hat. Günstigerweise wird dabei der Spiegel in eine erste Orientierung gebracht, in der die Vielzahl von Detektoren ein Intensitätsmaximum des ersten Strahls misst. Weiterhin ist es vorteilhaft, wenn der erste Spiegel in eine zweite Orientierung gebracht wird, in der die Vielzahl von Detektoren ein Intensitätsmaximum des zweiten Strahls misst. Der Vorteil dabei ist, dass eine Orientierung des ersten Spiegels in Verbindung gebracht werden kann mit der Intensität des Strahls auf der Vielzahl von Detektoren.

Es ist weiterhin vorteilhaft, wenn der erste Spiegel in eine dritte Orientierung gebracht wird, in der die Vielzahl von Detektoren ein Intensitätsmaximum des ersten Strahls misst. Weiterhin ist es günstig, wenn der erste Spiegel in eine vierte Orientierung gebracht wird, in der die Vielzahl von Detektoren ein Intensitätsmaximum des zweiten Strahls misst. Nach der Ermittlung der Spiegelorientierungen für jeden Strahl, ist es vorteilhaft, die Abweichung der Strahlen voneinander mittels der Differenz der Spiegelorientierungen zu bestimmen. Dazu ist es günstig, mit einem geeigneten Verfahren die Spiegelorientierungen zu messen.

Die erste und zweite Orientierung des ersten Spiegels werden jeweils dadurch bestimmt, dass der erste Spiegel mit einem zusätzlichen Strahl bestrahlt wird. Die Ablenkung des zusätzlichen Strahls durch den ersten Spiegel wird dabei mittels eines zweiten Detektors ermittelt. Die Orientierung des ersten Spiegels wird dabei durch die Ablenkung des zusätzlichen Strahls ermittelt. Das ist eine besonders vorteilhafte Messmethode zur Bestimmung der Orientierung des ersten Spiegels, weil der Betrieb des Projektors dabei nicht gestört wird. Der zusätzliche Strahl ist dazu unter einem geneigten Winkel zu dem zumindest ersten und zweiten Strahl angeordnet. Das hat zum Vorteil, dass es keine Interferenzen zwischen den Strahlen geben kann.

Aus der erste und zweite Orientierung des ersten Spiegels wird eine Winkelabweichung zwischen dem ersten und dem zweiten Strahl ermittelt. Die Ermittlung der tatsächlichen Abweichung des ersten und zweiten Strahls auf der Projektionsfläche lässt sich mit der ermittelten Winkelabweichung erhalten. Das hat zum Vorteil, dass die tatsächliche Abweichung der Strahlen voneinander auf der Projektionsfläche über die Ermittlung der Spiegel Orientierungen stattfinden kann.

In einer weiteren vorteilhaften Ausführungsform wird aus den in Verfahrensschritt A) ermittelten Winkelabweichungen eine Phasenverschiebung des zumindest ersten elektronischen Signals relativ zum zweiten elektronischen Signal ermittelt. Das hat zum Vorteil, dass die Orientierung der Spiegel beziehungsweise die Position der Detektoren Werte für Winkelabweichungen liefert, mit denen die Ansteuerung der Strahlen in Beziehung gebracht werden können.

Weiterhin ist es vorteilhaft, wenn in Verfahrensschritt B) der Soll-Eindruck durch zeitliche Intensitätsvariation des ersten und/oder zweiten elektronischen Signals mittels der ermittelten Phasenverschiebung aus dem Ist-Eindruck wieder hergestellt wird. Der Vorteil dabei ist, dass die Wiederherstellung des Soll-Eindrucks auf der Projektionsfläche nicht durch eine mechanische Veränderung des Projektors geschieht, sondern durch die Berechnung einer Phasenverschiebung und die somit mögliche zeitliche Intensitätsvariation der elektronischen Signale, die für die Steuerung der Strahlen ververantwortlich sind. Die zeitliche Intensitätsvariation umfasst dabei vorteilhafterweise eine zeitliche Verzögerung zumindest eines elektronischen Signals zur Ansteuerung eines Strahls. Damit kann günstigerweise der Soll-Eindruck der Abbildung auf der Projektionsfläche erzeugt werden, wenn beispielsweise zeilenweise die Bildpunkte durch den zumindest ersten und zweiten Strahl erzeugt werden (Flying-Spot-Verfahren).

In einer weiteren vorteilhaften Ausgestaltung eines weiteren Ausführungsbeispiels kann von einer zeilenweisen Erzeugung der Bildpunkte auf der Projektionsfläche (Zeilenrasterung) abgesehen werden. Das erfindungsgemäße Verfahren ist auch für beliebige Trajektorien der Strahlen auf der Projektionsfläche anwendbar, so kann die Trajektorie entlang einer von einer Geraden abweichenden Linie verlaufen. In einer Ausführungsform beschreibt die Trajektorie Lissajous-ähnliche Figuren auf der Projektionsfläche.

Die Aufgabe wird auch gelöst durch eine Projektions-Vorrichtung, die eine erste und zweite Strahlungsquelle zur Erzeugung eines ersten und zweiten Strahls aufweist, sowie eine Projektionseinrichtung zur Projektion des ersten und zweiten Strahls auf eine Projektionsfläche. Die Abbildung wird auf die Projektionsfläche projiziert. Die Projektions-Vorrichtung weist weiterhin eine elektronische Steuerung für die erste und zweite Strahlungsquelle auf, sowie eine Detektionsvorrichtung mit einem ersten Detektor und einem zweiten Detektor zur Detektion einer Abweichung zwischen der Projektion des ersten und zweiten Strahls auf der Projektionsfläche. Die Projektions-Vorrichtung ist zur Durchführung der Methode nach einem der vorhergehenden Ansprüche eingerichtet und ist so eingerichtet ist, dass in Abhängigkeit von der durch die Detektionsvorrichtung detektierten Abweichung zwischen der Projektion des ersten und zweiten Strahls auf der Projektionsfläche, die elektronische Steuerung für die erste und/oder zweite Strahlungsquelle zeitlich so verzögert werden wird, dass die Abweichung vermindert beziehungsweise korrigiert wird. Das heißt, jeder Bildpunkt auf der Projektionsfläche, der durch die Strahlen dargestellt wird, kann durch die zeitliche Verzögerung der Strahlen klarer dargestellt werden, da die zeitliche Verzögerung der Örtlichen Abweichung der Strahlen voneinander aufgrund der Trägheit der Wahrnehmungsempfindung eines außen stehenden Beobachters entgegenwirkt. Das hat zum Vorteil, dass die Projektions-Vorrichtung nicht mechanisch verändert werden muss, um die Bildqualität auf der Projektionsfläche zu verbessern. Es ist lediglich eine messtechnische Maßnahme notwendig, um mit den daraus erhaltenen Werten und Berechnungen die elektronische Ansteuerung der Strahlen dahingehend zu verändern, dass die Bildqualität verbessert wird.

Ferner umfasst die zumindest erste und zweite Strahlungsquelle der Projektions-Vorrichtung Laser. Dabei ist es vorteilhaft, wenn die emittierten Wellenlängen der Laser einen roten, grünen oder blauen Spektralbereich umfassen. Der Vorteil dabei ist, dass mit dieser Farbwahl an Lasern ein breites Spektrum an Farben dargestellt werden kann.

Weiterhin ist es vorteilhaft, wenn die elektronische Steuerung für die erste und zweite Strahlungsquelle separate elektronische Signale erzeugt. Das hat zum Vorteil, dass jede einzelne Strahlungsquelle separat und damit jeder einzelne Strahl separat angesteuert werden kann. Eine eventuelle zeitliche Intensitätsvariation des Signals für einen einzelnen Strahl wird somit erleichtert. Es ist weiterhin vorteilhaft, wenn ein elektronisches Signal zur Erzeugung eines Bildes vorhanden ist, das eine Videoelektronik umfasst. Das hat den Vorteil, dass durch die Projektions-Vorrichtung ein bewegtes Bild erzeugt werden kann.

Ein weiteres vorteilhaftes Merkmal ist, wenn die elektronisehe Steuerung für die Strahlungsquelle einen Treiber zur Steuerung des Signals umfasst. Das hat zum Vorteil, dass die elektronischen Signale für die Strahlungsquellen genauer und eventuell schneller übertragen werden können.

Ferner vorhanden ist ein erster Spiegel, der zur Lenkung des zumindest ersten und zweiten Strahls auf die Projektionsfläche vorhanden ist. Es ist vorteilhaft, wenn der erste Spiegel von einem elektronischen Treiber angesteuert wird. Das hat zum Vorteil, dass die Strahlen durch den elektronisch angesteuerten ersten Spiegel auf die Projektionsfläche gelenkt werden können und dabei die Bewegung des ersten Spiegels von den Strahlen unabhängig angesteuert werden kann.

Außerdem ist ein zweiter Spiegel zur Lenkung des zumindest ersten und zweiten Strahls auf die Detektionsvorrichtung vorhanden. Dabei ist eine Detektion der Strahlen auf einen Detektor möglich wird.

Ein weiteres vorteilhaftes Merkmal ist ein Filter, der zwischen dem zweiten Spiegel und der Detektionsvorrichtung vorhanden ist. Dieser Filter hat zum Vorteil, dass er einen gewünschten Strahl zur Detektionsvorrichtung durchkommen lässt, während er die anderen Strahlen herausfiltert.

Weiterhin ist es vorteilhaft, wenn zwischen, dem zweiten Spiegel und der Detektionsvorrichtung diffraktive Elemente vorhanden sind. Das hat zum Vorteil, dass die Strahlen aufgetrennt und nach dem diffraktiven Element in verschiedene Richtungen gelenkt werden können.

Es ist weiterhin vorteilhaft, wenn zwischen dem zweiten Spiegel und der Detektionsvorrichtung eine Linse zur Fokussierung der Strahlung vorhanden ist. Das hat zum Vorteil, dass die Breite der Strahlen, die technisch bedingt entstehen, minimiert wird, und somit die Detektion der Position der Projektionen der Strahlen auf der Detektionsvorrichtung verbessert wird.

Ein weiteres vorteilhaftes Merkmal ist eine Steuereinheit, beispielsweise ein Chip, der mit dem ersten Spiegel und der Detektionsvorrichtung über lesende Daten-Leitungen verbunden ist. Das hat zum Vorteil, dass das elektronische Steuerelement Daten von der Orientierung des ersten Spiegels und der Position der Detektionsvorrichtung geliefert werden.

Es ist weiterhin vorteilhaft, wenn die Steuereinheit über schreibende Daten-Leitungen mit dem Treiber des ersten Spiegels und der elektronischen Steuerung für die erste und zweite Strahlungsquelle verbunden ist. Das hat zum Vorteil, dass das elektronische Steuerelement die Daten, die es über die lesenden Daten-Leitungen erhalten hat, verarbeiten kann, und neue Daten zu dem Treiber des ersten Spiegels und der elektronischen Steuerung für die erste und zweite Strahlungsquelle weiterleiten kann.

Anhand der Figuren und der Ausführungsbeispiele soll die Erfindung naher erläutert werden:
FIG 1 zeigt einen schematischen Aufbau einer Projektions-Vorrichtung mit drei Strahlungsquellen, z. B. Laser, und Projektionsfläche.
FIG 2 zeigt den schematischen Aufbau einer Projektions-Vorrichtung mit drei Strahlungsquellen, z. B, Laser, und Projektionsfläche und einer Abweichung der Strahlen voneinander.
FIG 3 zeigt den schematischen Aufbau einer Ausführungsform der Methode zur Messung der Position der Strahlen.
FIG 4 zeigt den schematischen Aufbau zur Fokussierung der Strahlen in dem Messaufbau mittels einer Linse.
FIG 5 zeigt die Projektionen der Strahlen auf der Projektionsfläche und die Ermittlung der Abweichung voneinander.
FIG 6 zeigt einen schematischen Aufbau einer Projektionsvorrichtung zur Umsetzung der Methode zur Verbesserung der Bildqualität.

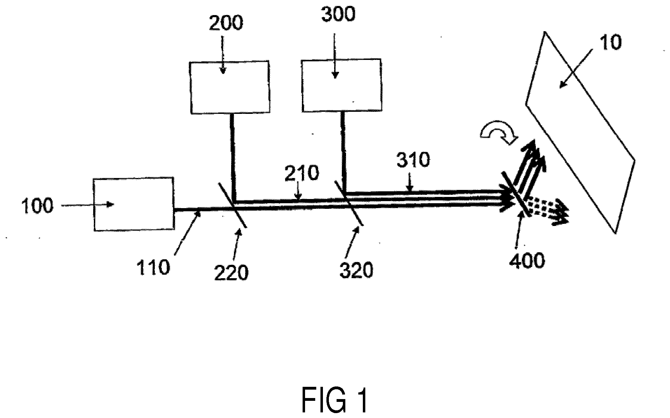

FIG 1 zeigt den schematischen Aufbau einer Projektions-Vorrichtung mit drei Strahlungsquellen 100, 200 und 300. Diese Strahlungsquellen senden die Strahlen 110, 210, und 310 aus. Da die drei Strahlungsquellen nicht alle an einem Ort platziert werden können, werden die Strahlen der Strahlungsquelle 200 und 300 über die Umlenkspiegel 220 und 320 umgelenkt und mit dem Strahl 110 in Deckung gebracht. Die drei Strahlen treffen auf den ersten Spiegel 400, der beweglich ist. Über die Bewegung des ersten Spiegels 400 können die drei Strahlen 110, 210 und 310 auf die Projektionsfläche 10 gelenkt werden. Durch geeignete Bewegung des Spiegels 400 wird dadurch Punkt für Punkt auf der Projektionsfläche 10 ein Bild erzeugt. Dieses Verfahren zur Projektion eines Bildes wird auch "Flying-Spot-Verfahren" genannt. Die drei Strahlungsquellen 100, 200 und 300 sind in einer bevorzugten Ausführungsform Laser, womit die Strahlen 110/ 210 und 310 Laserstrahlen sind. Es ist günstig, die Farben der Laser rot, blau und grün zu wählen. Dadurch können beliebig viele Farben im Farbspektrum erzeugt werden. Ein sehr vielfältiges Bild kann damit auf der Projektionsfläche 10 erzeugt werden. Im Idealfall überlagern sich die drei Strahlen 110, 210 und 310 durch den in FIG 1 dargestellten Aufbau exakt, so dass der gewünschte Soll-Eindruck entsteht, Fertigungsbedingte minimale Winkelabweichungen führen jedoch zu einer Abweichung der Strahlen voneinander, was zu der Entstehung eines vom Soll-Eindruck abweichenden Ist-Eindrucks führt.

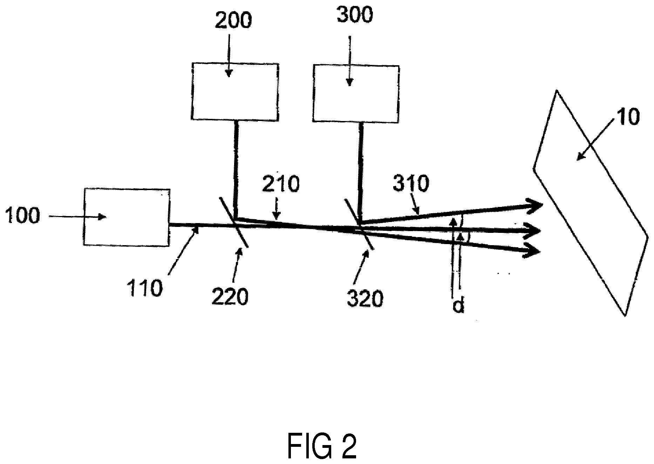

Eine solche Winkel-Abweichung d ist in FIG 2 zu sehen. Hier sieht man, dass die drei Strahlen 110, 210 und 310 eine Abweichung voneinander zeigen, die sich auch auf der Projektionsfläche 10 widerspiegelt. Oft ist es nicht möglich bzw. sehr schwer, Projektions-Vorrichtungen mechanisch soweit zu verbessern, um eine solche Winkelabweichung zu vermeiden. Oft können sich die Winkel durch thermischen Stress auch während des Betriebs ändern.

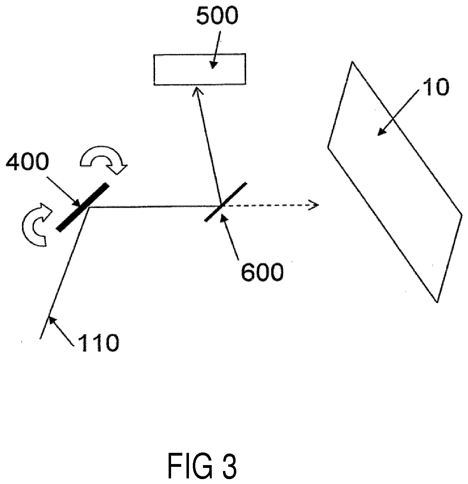

Daher wird in vorliegender Erfindung, wie in FIG 3 gezeigt, eine Messmethode bzw. ein Messverfahren zur Positionierung der Strahlen eingeführt. In FIG 3 ist beispielsweise die Messung der Position des Strahls 110 zu sehen. Dieser wird über den beweglichen ersten Spiegel 400 abgelenkt und auf die Projektionsflache 10 projiziert. Zwischen dem ersten Spiegel 400 und der Projektionsfläche 10 befindet sich ein weiterer zweiter Spiegel 600. Dieser kann semi-transparent sein, wodurch ein Teil des Strahls 110 weiterhin auf die Projektionsfläche 10 projiziert werden kann, ein anderer Teil des Strahles jedoch von dem Spiegel 600 abgelenkt wird. Der abgelenkte Strahl 110 wird auf einen Detektor 500 projiziert. In den verschiedenen Ausführungsformen der Erfindung ist es möglich, die Position des Strahls 110 während des Betriebs der Projektions-Vorrichtung oder vor dem Betrieb der Projektions-Vorrichtung zu ermitteln. In einem so genannten Offline-Betrieb wird zwar zum Zeitpunkt der Messung der Position der Strahlen Strahlung in Richtung der Projektionsfläche durchgeführt, es wird jedoch keine Bildinformation übertragen. Der so genannte Online-Betrieb bedeutet, dass die Durchführung der Messung der Position der Strahlen während des Projektions-Betriebs erfolgt. Anhand der FIG 3 kann sowohl der Offline-Betrieb als auch der Online-Betrieb erläutert werden.

Sowohl im Offline-Betrieb als auch im Online-Betrieb können zwei unterschiedliche Verfahren durchgeführt werden. Ein Verfahren weist eine variable Spiegelstellung und einen ortsfesten Detektor auf, das andere Verfahren eine variable Detektorposition bei definierter Spiegelstellung.

Als erstes Ausführungsbeispiel soll die Variante Offline-Betrieb mit ortsfestem Detektor erläutert werden. Hierbei ist zur Durchführung der Messung der Position der Strahlen jeweils nur ein einzelner Strahl in Betrieb. Der zweite Spiegel 600 kann semi-transparent sein oder nichttransparent, da es nicht notwendig ist, das der Strahl auf die Projektionsfläche projiziert werden muss. Der zweite Spiegel 600 sollte jedoch so positioniert werden dass er den jeweiligen Strahl, der gerade in Betrieb ist, zumindest teilweise auf einen Detektor 500 mit feststehender Position lenkt. Der jeweilige Strahl, der auf den Detektor 500 gelenkt wird, erzeugt dabei eine Projektion auf dem Detektor. Der erste, bewegliche Spiegel 400 wird nun solange bewegt, bis er sich in einer Orientierung befindet, bei der am Detektor 500 eine maximale Intensität des jeweiligen Strahls gemessen wird. Dies wird für jeden Strahl, beispielsweise den Strahl 110, 210 und 310 einzeln durchgeführt. Besonders vorteilhaft ist es, wenn für jeden der Strahlen eine weitere Orientierung des ersten Spiegels 400 ermittelt wird bei der am ersten Detektor 500 die maximale Intensität des Strahls gemessen wird. Dies trägt zur Erhöhung der Messgenauigkeit bei. Die jeweiligen Orientierungen des ersten Spiegels 400 können jeweils berührungslos über die Kapazität zwischen dem ersten Spiegel 400 und einem Gegenstück gemessen werden. Es ist auch möglich/ die Orientierungen des ersten Spiegels 400 mit einem mechanischen Fühler zu messen. Weiterhin kann die Orientierung des Spiegels jeweils dadurch bestimmt werden, dass der erste Spiegel 400 mit einem zusätzlichen Strahl bestrahlt wird, und dessen Ablenkung mittels eines zweiten Detektors ermittelt wird. Dabei ist es vorteilhaft wenn der zusätzliche Strahl jeweils unter einem geneigten Winkel zu dem Strahl, der gerade in Betrieb ist, angeordnet wird. Aus den gemessenen Orientierungen des ersten Spiegels 400 können dann Differenzen gebildet werden aus den Orientierungen des Spiegels für den ersten Strahl, einen zweiten und einen dritten Strahl. Die Ermittlung der Orientierung des Spiegels und der Differenz der Orientierungen des Spiegels für die jeweiligen Strahlen dient dazu, die tatsächliche Abweichung der Strahlen voneinander zu ermitteln. Die Messung der Position der Strahlen kann somit bauteilintern erfolgen oder - extern. Aus der Differenz der Orientierungen der Spiegel für die jeweiligen Strahlen kann eine Winkelabweichung zwischen den Strahlen ermittelt werden.

Eine weitere Ausführungsform der Erfindung ist die Messmethode der Strahlposition im Offline-Betrieb bei variabler Detektorposition. Hierbei wird der erste Spiegel 400 für jeden Strahl in zumindest einer feststehenden Orientierung gehalten. Der Detektor 500 wird für jeden Strahl, beispielsweise den Strahlen 110, 210 und 310, in jeweils eine Position gebracht, bei der am Detektor eine maximale Intensität des jeweiligen Strahls gemessen wird. Die Messung der Position des Detektors kann bauteilintern erfolgen. Die bauteilinterne Messung erfolgt berührungslos über die Kapazität zwischen dem Detektor und einem Gegenstück oder mittels eines mechanischen Fühlers. Möchte man die Messung der Detektorposition vermeiden, so kann man weiterhin statt eines einzelnen Detektors eine Vielzahl an Detektoren (Detektor-Array) zur Ermittlung der Positionen der Projektionen der Strahlen verwenden. Dabei wird die Vielzahl von Detektoren so positioniert, dass alle Positionen der Projektionen der Strahlen auf der Vielzahl von Detektoren gemessen werden können, ohne die Vielzahl der Detektoren bewegen zu müssen. Durch die aufeinander folgende Messung der Positionen der Projektion der Stahlen auf der Vielzahl von Detektoren wird eine Winkelabweichung zwischen den Strahlen ermittelt, die zur Ermittlung der tatsächlichen Abweichung der Strahlen auf der Projektionsfläche voneinander verwendet wird.

Im Online-Betrieb ist der zweite Spiegel 600 semi-transparent und dauerhaft installiert um besonders vorteilhaft einen Teil der Strahlen auf die Projektionsfläche zur Erzeugung der Abbildung zu lenken und gleichzeitig einen anderen Teil der Strahlen auf die Detektoren zur Bestimmung der Abweichung der Strahlen voneinander zu lenken. Mit anderen Worten, sind alle Farben gleichzeitig in Betrieb, was bedeutet, dass auf der Projektionsfläche 10 ein Bild erzeugt wird, während gleichzeitig die Position der Strahlen auf einem Detektor 500 gemessen wird. Die Ablenkung der Strahlen, beispielsweise die Strahlen 110, 210 und 310, auf dem Detektor 500 geschieht mittels des zweiten Spiegels 600. Da alle Strahlen gleichzeitig in Betrieb sind, ist es nötig, zur Trennung der Strahlen vor dem Detektor 500 im Strahlengang bestimmte Elemente einzuführen. Dazu eignet sich beispielsweise ein wellenlängenselektiver Filter, der zwischen dem zweiten Spiegel 600 und dem Detektor 500 vorhanden ist. Dieser Filter ermöglicht es jeweils nur einem Strahl, zu dem Detektor 500 vorzudringen, während die anderen Strahlen abgeblockt werden. Dadurch kann jeweils die Position der Projektion eines Strahls gemessen werden. Eine weitere Möglichkeit zur Trennung der Strahlen ist ein diffraktives Element, das nach dem zweiten Spiegel 600 vorhanden ist. Ein diffraktives Element sorgt dafür, dass die Strahlen in verschiedene Richtungen gelenkt werden und somit ebenfalls aufgetrennt werden.

Im Online-Betrieb mit ortsfestem Detektor wird als Detektor eine Vielzahl von Detektoren verwendet. Der jeweilige Strahl, der auf die Vielzahl von Detektoren gelenkt wird, erzeugt eine Projektion auf dieser Vielzahl von Detektoren. Der erste Spiegel 400 wird wiederum in verschiedene Orientierungen gebracht, bei der die jeweiligen Strahlen auf der Vielzahl von Detektoren mit einem Intensitätsmaximum gemessen werden können. Das kann vorteilhafterweise wieder für jeden Strahl mehrmals durchgeführt werden und jeweils eine neue Orientierung des Spiegels ermittelt werden. Die Orientierungen des Spiegels 400 können jeweils bauteilintern oder -extern gemessen werden. Das sind beispielsweise die berührungslose Messung über die Kapazität zwischen dem Spiegel 400 und einem Gegenstück oder die Messung mit einem mechanischen Fühler. Als externe Variante kann die Bestrahlung mit einem zusätzlichen Strahl verwendet werden, dessen Ablenkung mittels eines weiteren Detektors ermittelt wird. Dieser zusätzliche Strahl ist vorteilhafterweise unter einem geneigten Winkel zu den übrigen Strahlen angeordnet. Die so ermittelten Orientierungen des ersten Spiegels 400 werden herangezogen, um Differenzen von Spiegelorientierungen für die jeweiligen Strahlen zu ermitteln. Aus diesen Differenzen werden wiederum Winkelabweichungen zwischen den jeweiligen Strahlen ermittelt und daraus die tatsächliche Abweichung der Strahlen auf der Projektionsfläche berechnet.

Eine weitere Möglichkeit beim Online-Betrieb ist es, den ersten Spiegel 400 in definierte Orientierungen für jeden Strahl zu bringen. Ein Detektor 500 kann für jeden Strahl in eine Position gebracht werden, bei der am Detektor eine maximale Intensität des jeweiligen Strahls gemessen wird. Die Messung der Position des Detektors kann bauteilintern erfolgen. Die interne Messung ist die berührungslose Messung über die Kapazität zwischen dem Detektor und einem Gegenstück oder die Messung mit einem mechanischen Fühler.

Es kann weiterhin eine Vielzahl von Detektoren verwendet werden, die so positioniert wird, dass alle Projektionen der Strahlen gleichzeitig gemessen werden können. Dabei ist eine Bewegung der Vielzahl von Detektoren nicht notwendig. Aus den Positionen der Projektionen der Strahlen auf der Vielzahl von Detektoren kann eine Winkelabweichung zwischen den jeweiligen Strahlen ermittelt werden. Mit der Winkelabweichung wiederum kann die tatsächliche Abweichung der Strahlen voneinander auf der Projektionsfläche 10 ermittelt werden. Der Unterschied der beiden Methoden im Online-Betrieb einmal mit ortsfestem Detektor und einmal mit ortsfestem Spiegel ist, dass beim ortsfesten Detektor ein Signal ausgesendet wird wenn der Detektor ein maximales Intensitätsmaximum anzeigt. Ist der Spiegel in einer definierten Orientierung wird ein Signal ausgesendet, wenn der Spiegel sich in jener definierten Orientierung befindet. Beide Signale sorgen dafür, dass die zeitliche Intensitätsvariation der Steuerung der Strahlungsquellen erfolgt.

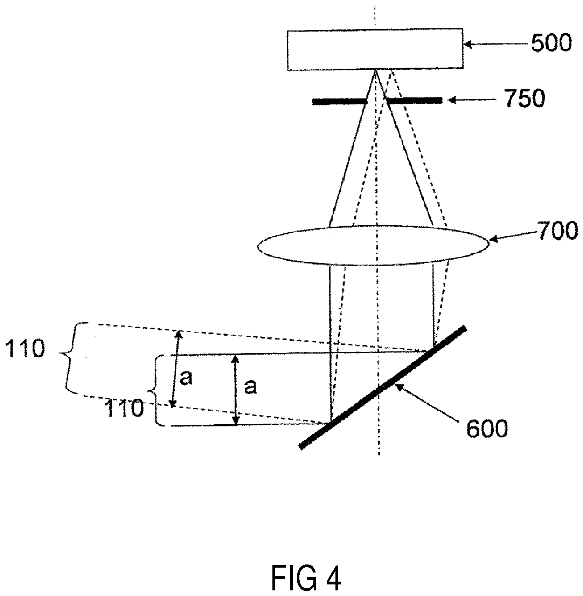

In FIG 4 ist schematisch die Fokussierung der Strahlen vor dem Detektor zu sehen. Die Einführung einer Linse 700 zwischen dem zweiten Spiegel 600 und dem Detektor 500 ist besonders vorteilhaft, um eine Verbesserung der Messgenauigkeit herbeizuführen. Jeder Stahl, beispielsweise der Strahl 110, hat eine technisch bedingte Breite a. Diese Breite kann durch die Einführung einer Linse minimiert werden. Durch die weitere Einführung einer Blende 750 zwischen der Linse 700 und dem Detektor 500 kann weiterhin die richtige Position des Strahls definiert werden. Durch Bewegung des Spiegels 600 wird die Position der Projektion des Strahls 110 bewegt und kann in eine Orientierung gebracht werden, bei der der Strahl genau durch die Blendenöffnung auf den Detektor 500 trifft. Ein fokussierter Strahl liefert ein genaueres Ergebnis über die Position seiner Projektion auf dem Detektor. Die Verwendung von einer Blende und Linse kann den Strahldurchmesser auf etwa 20 bis 30 µm oder noch geringer reduzieren.

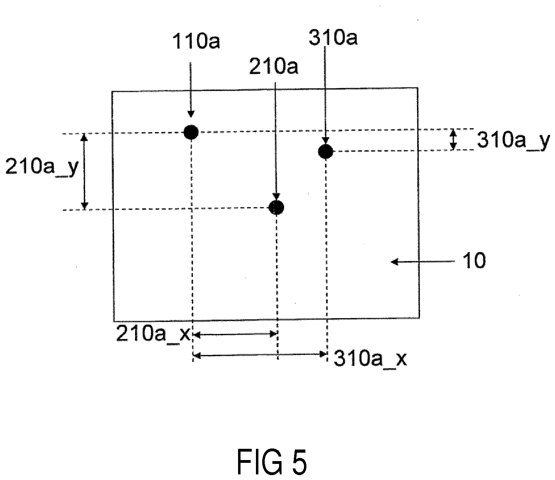

In FIG 5 ist ein Beispiel zur Ermittlung der Abweichung der Projektionen der Strahlen auf der Projektionsfläche 10 zu sehen. Die Projektionen der Strahlen 110, 210 und 310 sind auf der Projektionsfläche 10 als Punkte 110a, 210a und 310a zu sehen. Die drei Punkte haben bei beispielsweise einer Wahl als Referenzpunkt 110a jeweils zwei Abweichungen. Der Punkt 210a weicht von dem Punkt 110a in x und y-Richtung ab. Die Differenzen sind als 210a_y und 210a_x bezeichnet. Ebenso weist die Projektion des Strahls 310, 310a eine Abweichung in y-Richtung und x-Richtung von dem Punkt der Projektion 110a auf. Diese Abweichungen werden als 310a_y und 310a_x bezeichnet. Man erhält also relative Abweichungen der Projektionen von einem gewählten Referenzprojektionspunkt. Aus diesen Abweichungen können Winkelabweichungen ermittelt werden. Beispielsweise führt die Annahme, dass ein Pixelversatz um eine Zeile und eine Spalte bei einer Auflösung von 1024 x 768, einer Projektionsentfernung von 1,5 m und einer Bildgröße von 42 cm x 29,7 cm zu einer Winkelabweichung von 0,015° in der Zeile und 0,016° in der Spalte. Die Winkelabweichungen wiederum führen zur Ermittlung der tatsächlichen Abweichungen der Projektionen auf der Projektionsfläche.

Aus den Winkelabweichungen kann eine Phasenverschiebung der Strahlen voneinander ermittelt werden. Die Phasenverschiebung bezieht sich auf die elektronischen Signale zur Ansteuerung der jeweiligen Strahlen. Werden die elektronischen Signale der jeweiligen Strahlen um die Phasenverschiebung, die ermittelt wurde, moduliert, was eine zeitliche Verzögerung der einzelnen Strahlen bedeutet, kann der gewünschte Farbeindruck auf der Projektionsfläche 10 wiederhergestellt werden.

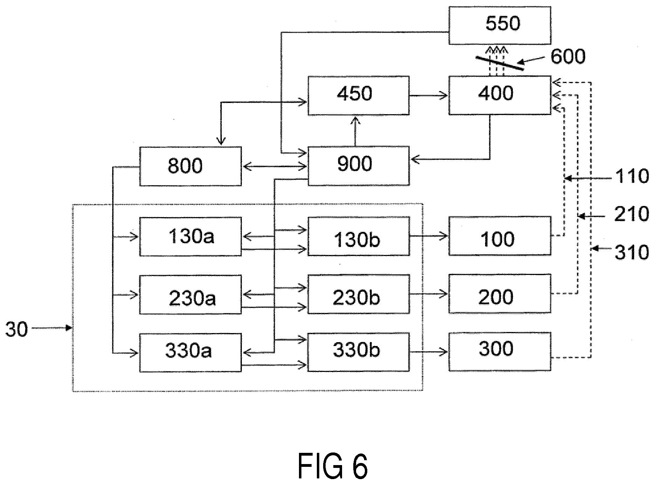

FIG 6 zeigt schematisch die Umsetzung der oben erläuterten Ausführungsbeispiele der Erfindung in einer Ausführungsform einer Projektions-Vorrichtung. Es ist dort eine Projektions-Vorrichtung zu sehen, die eine Videoelektronik 800 umfasst, die zur Projektion bewegter oder stehender Bilder führt. Weiterhin ist eine zentrale Steuereinheit 900 vorhanden, vorzugsweise ein Chip. Die Videoelektronik 800 leitet Daten zur elektronischen Steuerung 30 für die Strahlungsquellen. Die elektronische Steuerung 30 für die Strahlungsquellen kann sich zusammensetzen aus Verzögerungsgliedern 130a, 230a und 330a für jede Strahlungsquelle 100, 200 und 300 sowie Treibern für jede Strahlungsquelle 130b, 230b und 330b. Die Strahlungsquellen, die vorteilhafterweise Laser sind, senden Strahlen 110, 210 und 310 zu einem beweglichen ersten Spiegel 400, Dieser erste Spiegel 400 wird von einem ersten elektronischen Treiber 450 angesteuert. Der erste Spiegel 400 leitet die Strahlen auf eine Projektionsfläche, Zwischen dem Spiegel 400 und einer Detektionsvorrichtung 550 zur Durchführung der Messungen der Strahlungspositionen ist ein zweiter Spiegel 600 angebracht, der die Strahlen in die gewünschte Richtung lenkt. Die Detektionsvorrichtung 550 ist nach den oben beschriebenen Ausführungsbeispielen ausgestattet und kann insbesondere einen ersten Detektor oder eine Vielzahl von Detektoren umfassen. Die Steuereinheit 900 ist Über lesende Daten-Leitungen mit dem ersten Spiegel 400, der Detektionsvorrichtung 550 und dem elektronischen Signal 800 zur Erzeugung eines Bildes verbunden. Das heißt, die Steuereinheit 900 erhält Daten über die Orientierung des Spiegels 400, über den Fortschritt der elektronischen Signale zur Erzeugung eines Bildes und über die Ergebnisse der Messungen der Detektionsvorrichtung 550. Weiterhin ist die Steuereinheit 900 über schreibende Daten-Leitungen mit dem Treiber des ersten Spiegels 450, der elektronischen Steuerung 30 für die Strahlungsquellen und dem elektronischen Signal 800 zur Erzeugung eines Bildes verbunden. Das heißt, die Steuereinheit 900 kann über die ermittelten Daten, die es von den lesenden Leitungen erhalten hat, überarbeitete Daten an den Treiber des ersten Spiegels 450 senden zur neuen Orientierung dieses Spiegels, an die elektronische Steuerung für die Strahlungsquellen zur Regulierung der Strahlen 110, 210 und 310 und an das elektronische Signal 800 zur Erzeugung eines Bildes zur zeitlichen Intensitätsvariation der Signale, die unter den neuen Bedingungen notwendig sind. Beispielsweise können so die Verzögerungsglieder 130a, 230a und 330a dafür sorgen, dass die Strahlungsquellen 100, 200 und 300 zu modulierten Zeiten Strahlen in modulierter Intensität aussenden, um die Bildqualität auf der Projektionsfläche 10 zu verbessern. Aus den ermittelten Spiegelorientierungen für jeden Strahl werden Phasenverschiebungen ermittelt aus denen Steuerungssignale an die Verzögerungsglieder gesendet werden. Die Erfindung ist allgemein nicht durch die Beschreibung anhand der Ausführungsbeispiele beschränkt.

## Patentansprüche

1. Methode zur Projektion einer Abbildung mittels zumindest eines ersten (110) und zweiten (210) Strahls auf eine Projektionsfläche (10),
- wobei durch die Überlagerung der Projektion des ersten und zweiten Strahls (110; 210) auf die Projektionsfläche (10) ein Soll-Eindruck der Abbildung erzeugt werden soll,
- wobei der zumindest erste (110) und zweite (210) Strahl zur Projektion der Bildpunkte mittels eines ersten Spiegels (400) auf die Projektionsfläche (10) gelenkt werden,
- wobei durch eine tatsächliche Abweichung (d) der Projektion des ersten und des zweiten Strahls (110; 210) auf die Projektionsfläche (10) ein von dem Soll-Eindruck abweichender Ist-Eindruck der Abbildung erzeugt wird,
mit den Verfahrensschritten
A) Ermittlung der tatsächlichen Abweichung der Projektion des ersten von dem zweiten Strahl (110; 210) auf der Projektionsfläche (10),
B) zeitliche Variation der Intensität des ersten Strahls (110) und/oder des zweiten Strahls (210) nach den im Verfahrensschritt A) ermittelten Abweichungen zur Erzeugung des Soll-Eindrucks,
wobei
zur Durchführung des Verfahrensschritts A) zwischen dem ersten Spiegel (400) und der Projektionsfläche (10) ein zweiter Spiegel (600) orientiert wird und jeweils nur ein einzelner Strahl (110, 210) in Betrieb ist und wobei
- der zweite Spiegel (600) so orientiert wird, dass er den jeweiligen Strahl (110, 210), der in Betrieb ist, zumindest teilweise auf einen ersten Detektor (500) mit feststehender Position lenkt,
**dadurch gekennzeichnet, dass**
- der erste Spiegel (400) für den ersten Strahl (110) in eine erste Orientierung gebracht wird, bei der am ersten Detektor (500) eine maximale Intensität des ersten Strahls (110) gemessen wird und wobei der erste Spiegel (400) für den zweiten Strahl (210) in eine zweite Orientierung gebracht wird, bei der am ersten Detektor (500) eine maximale Intensität des zweiten Strahls (210) gemessen wird und die erste und zweite Orientierung des ersten Spiegels (400) jeweils dadurch bestimmt wird, dass der erste Spiegel (400) mit einem zusätzlichen Strahl (310) bestrahlt wird und dessen Ablenkung mittels eines zweiten Detektors ermittelt wird, wobei die Orientierung des ersten Spiegels (400) durch die Ablenkung des zusätzlichen Strahls (310) ermittelt wird,
und zudem
- der zusätzliche Strahl (310) unter einem geneigten Winkel zu dem zumindest ersten und zweiten Strahl (110, 210) angeordnet wird, wobei aus der ersten und zweiten Orientierung des ersten Spiegels (400) eine Winkelabweichung zwischen erstem (110) und zweitem (210) Strahl ermittelt wird, die zur Ermittlung der tatsächlichen Abweichung (d) des ersten und zweiten Strahls (110, 210) auf der Projektionsfläche (10) verwendet wird.

2. Methode nach Anspruch 1, wobei als erster (110) und zweiter (210) Strahl Laserstrahlen verwendet werden und wobei der Wellenlängenbereich der Laserstrahlen einen roten, grünen oder blauen Spektralbereich umfasst.

3. Methode nach einem der vorhergehenden Ansprüche, wobei während des Verfahrensschrittes A) der erste Spiegel (400) für jeden Strahl in zumindest einer feststehenden Orientierung gehalten wird.

4. Methode nach Anspruch 3, wobei zur Ermittlung der Position der Projektion der Strahlen auf dem Detektor (500) eine Vielzahl von Detektoren vorhanden ist, wobei aus den Positionen der Projektion der Strahlen auf der Vielzahl von Detektoren die Winkelabweichung zwischen ersten (110) und zweiten (210) Strahl ermittelt wird.

5. Methode nach dem vorhergehenden Anspruch, wobei die Vielzahl von Detektoren so positioniert wird, dass alle Positionen der Projektionen der Strahlen auf der Vielzahl von Detektoren gemessen werden können.

6. Methode nach einem der vorhergehenden Ansprüche, wobei ein dritter Strahl (310) vorhanden ist, dessen Abweichung vom ersten (110) und/oder zweiten (210) Strahl nach der Methode gemäß einer der vorhergehenden Ansprüche wird.

7. Methode nach einem der vorhergehenden Ansprüche, wobei aus den im Verfahrensschritt A) ermittelten Winkelabweichungen eine Phasenverschiebung eines zumindest ersten elektronischen Signals relativ zu einem zweiten elektronischen Signal ermittelt wird, wobei die elektronischen Signale die Intensität der jeweiligen Strahlen steuern und wobei im Verfahrensschritt B) der Soll-Eindruck durch zeitliche Intensitätsvariation des ersten und/oder zweiten elektronischen Signals mittels der ermittelten Phasenverschiebung aus dem Ist-Eindruck wiederhergestellt wird.

8. Projektionsvorrichtung, **dadurch gekennzeichnet, dass** sie zur Durchführung der Methode nach einem der vorhergehenden Ansprüche eingerichtet ist, aufweisend
- zumindest eine erste Strahlungsquelle (100) zur Erzeugung eines ersten Strahls (110), eine zweite Strahlungsquelle (200) zur Erzeugung eines zweiten Strahls (210) und eine zusätzliche Strahlungsquelle zur Erzeugung eines zusätzlichen Strahls (310), wobei die zumindest erste (100) und zweite (200) Strahlungsquelle Laser umfasst,
- eine Projektionseinrichtung (10)zur Projektion des ersten , zweiten und zusätzlichen Strahls auf eine Projektionsfläche, wobei eine Abbildung auf die Projektionsfläche projiziert wird und die Projektionseinrichtung einen ersten Spiegel (400) und einen zweiten Spiegel (600) zur Lenkung des zumindest ersten (110) und zweiten (210) Strahls auf die Projektionsfläche (10) umfasst,
- eine elektronische Steuerung (30) für die erste, zweite und zusätzliche Strahlungsquelle,
- eine Detektionsvorrichtung (550) mit einem ersten Detektor (500) und einem zweiten Detektor zur Detektion einer Abweichung (d) zwischen der Projektion des ersten und zweiten Strahls auf der Projektionsfläche,
- wobei die Projektionsvorrichtung zur Durchführung der Methode nach einem der vorhergehenden Ansprüche eingerichtet ist und so eingerichtet ist, dass in Abhängigkeit von der durch die Detektionsvorrichtung (550) detektierten Abweichung (d) zwischen der Projektion des ersten und zweiten Strahls (110, 210) auf der Projektionsfläche (10) die elektronische Steuerung für die erste und/oder zweite Strahlungsquelle (100, 200) so verzögert werden kann, dass die Abweichung vermindert bzw. korrigiert wird.

## Claims

1. A method for projecting an image onto a projection surface (10) by means of at least a first (110) and a second (210) beam,
- wherein a target impression of the image is intended to be produced by superposing the projection of the first and the second beam (110; 210) on the projection surface (10),
- wherein the at least first (110) and second (210) beam are steered by means of a first mirror (400) on to the projection surface (10) for the purposes of projecting the pixels,
- wherein an actual impression of the image that deviates from the intended impression is produced by an actual deviation (d) of the projection of the first and of the second beam (110; 210) on the projection surface (10)
including the method steps of:
A) determining the actual deviation of the projection of the first from the second beam (110; 210) on the projection surface (10),
B) varying the intensity of the first beam (110) and/or the second beam (210) in time according to the deviations determined in method step A) for the purposes of producing the target impression,
wherein
a second mirror (600) is oriented between the first mirror (400) and the projection surface (10) and only a single beam (110, 210) is operational in each case for the purposes of carrying out method step A) and
wherein
- the second mirror (600) is oriented in such a way that it steers at least a portion of the respective operational beam (110, 210) on a first detector (500) with a fixed position,
**characterized in that**
- the first mirror (400) is brought into a first orientation for the first beam (110), in which first orientation a maximum intensity of the first beam (110) is measured at the first detector (500), and wherein the first mirror (400) is brought into a second orientation for the second beam (210), in which second orientation a maximum intensity of the second beam (210) is measured at the first detector (500), and the first and second orientation of the first mirror (400) are each determined by virtue of the first mirror (400) being irradiated by an additional beam (310) and the deflection thereof being determined by means of a second detector, wherein the orientation of the first mirror (400) is ascertained by the deflection of the additional beam (310),
and moreover
- the additional beam (310) is disposed at an inclined angle with respect to the at least first and second beam (110, 210), wherein an angle deviation between the first (110) and second (210) beam is ascertained from the first and second orientation of the first mirror (400), said angle deviation being used to determine the actual deviation (d) of the first and second beam (110, 210) on the projection surface (10).

2. The method according to Claim 1, wherein laser beams are used as first (110) and second (210) beams and wherein the wavelength range of the laser beams comprises a red, green or blue spectral range.

3. The method according to any one of the preceding claims, wherein the first mirror (400) is kept in at least one fixed orientation for each beam during method step A).

4. The method according to Claim 3, wherein a multiplicity of detectors are present for determining the position of the projection of the beams on the detector (500), wherein the angle deviation between first (110) and second (210) beam is determined from the positions of the projection of the beams on the multiplicity of detectors.

5. The method according to the preceding claim, wherein the multiplicity of detectors are positioned in such a way that all positions of the projections of the beams can be measured on the multiplicity of detectors.

6. The method according to any one of the preceding claims, wherein a third beam (310) is present, the deviation of which from the first (110) and/or second (210) beam is determined according to the process according to any one of the preceding claims.

7. The method according to any one of the preceding claims, wherein a phase shift of an at least first electronic signal relative to a second electronic signal is determined from the angle deviations determined in method step A), wherein the electronic signals control the intensity of the respective beams and wherein, in method step B), the target impression is re-established from the actual impression by a variation in the intensity of the first and/or second electronic signal over time by means of the determined phase shift.

8. Projection apparatus, **characterized in that** it is configured to carry out the method according to any of the preceding claims, the projection apparatus comprising
- at least a first radiation source (100) for generating a first beam (110), a second radiation source (200) for generating a second beam (210) and an additional radiation source for generating an additional beam (310), wherein the at least first (100) and second (200) radiation source comprise lasers,
- a projection device (10) for projecting the first, second and additional beam on to a projection surface, wherein an image is projected on to the projection surface and the projection device comprises a first mirror (400) and a second mirror (600) for steering the at least first (110) and second (210) beam on to the projection surface (10),
- an electronic control (30) for the first, second and additional radiation source,
- a detection apparatus (550) comprising a first detector (500) and a second detector for detecting a deviation (d) between the projection of the first and second beam on the projection surface,
- wherein the projection apparatus is configured to carry out the method according to any of the preceding claims and configured in such a way that, depending on the deviation (d) between the projection of the first and second beam (110, 210) on the projection surface (10) as detected by the detection apparatus (550), the electronic control for the first and/or second radiation source (100, 200) can be delayed in such a way that the deviation is reduced or corrected.

## Revendications

1. Procédé de projection d'une représentation au moyen d'au moins un premier (110) et un deuxième (210) rayon sur une surface de projection (10),
- une impression voulue de la représentation devant être générée sur la surface de projection (10) par la superposition du premier et du deuxième rayon (110 ; 210),
- l'au moins un premier (110) et un deuxième (210) rayon étant déviés au moyen d'un premier miroir (400) sur la surface de projection (10) en vue de la projection des pixels,
- une impression réelle, différente de l'impression voulue, de la représentation étant générée par un écart (d) effectif de la projection du premier et du deuxième rayon (110 ; 210) sur la surface de projection (10),
comprenant les étapes suivantes
A) détermination de l'écart effectif de la projection du premier rayon à partir du deuxième rayon (110 ; 210) sur la surface de projection (10),
B) variation dans le temps de l'intensité du premier rayon (110) et/ou du deuxième rayon (210) d'après les écarts déterminés à l'étape de procédé A) en vue de générer l'impression voulue,
en vue d'exécuter l'étape de procédé A), un deuxième miroir (600) étant orienté entre le premier miroir (400) et la surface de projection (10) et un seul rayon (110, 210) individuel étant respectivement en service et
- le deuxième miroir (600) étant orienté de telle sorte qu'il dévie le rayon (110, 210) respectif, qui est en service, au moins partiellement sur un premier détecteur (500) ayant une position fixe,
**caractérisé en ce que**
- le premier miroir (400), pour le premier rayon (110), est amené dans une première orientation avec laquelle une intensité maximale du premier rayon (110) est mesurée au niveau du premier détecteur (500) et le premier miroir (400), pour le deuxième rayon (210), étant amené dans une deuxième orientation avec laquelle une intensité maximale du deuxième rayon (210) est mesurée au niveau du premier détecteur (500) et la première et la deuxième orientation du premier miroir (400) étant respectivement déterminées **en ce que** le premier miroir (400) est irradié avec un rayon supplémentaire (310) et sa déviation est identifiée au moyen d'un deuxième détecteur, l'orientation du premier miroir (400) étant identifiée par la déviation du rayon supplémentaire (310) ,
et en plus de cela
- le rayon supplémentaire (310) est disposé sous un angle incliné par rapport à l'au moins un premier et deuxième rayon (110, 210), un écart angulaire entre le premier (110) et le deuxième (210) rayon étant déterminé à partir de la première et de la deuxième orientation du premier miroir (400), lequel est utilisé pour l'identification de l'écart (d) effectif du premier et du deuxième rayon (110, 210) sur la surface de projection (10) .

2. Procédé selon la revendication 1, le premier (110) et le deuxième (210) rayon utilisés étant des rayons laser et la plage de longueurs d'onde des rayons laser comprenant une plage spectrale rouge, verte ou bleue.

3. Procédé selon l'une des revendications précédentes, durant l'étape de procédé A), le premier miroir (400) étant maintenu pour chaque rayon dans au moins une orientation fixe.

4. Procédé selon la revendication 3, une pluralité de détecteurs étant présents pour identifier la position de la projection des rayons sur le détecteur (500), l'écart angulaire entre le premier (110) et le deuxième (210) rayon étant identifié à partir des positions de la projection des rayons sur la pluralité de détecteurs.

5. Procédé selon la revendication précédente, la pluralité de détecteurs étant positionnés de telle sorte que toutes les positions des projections des rayons sur la pluralité de détecteurs peuvent être mesurées.

6. Procédé selon l'une des revendications précédentes, un troisième rayon (310) étant présent, dont l'écart par rapport au premier (110) et/ou au deuxième (210) rayon est d'après le procédé selon l'une des revendications précédentes.

7. Procédé selon l'une des revendications précédentes, un déphasage d'au moins un premier signal électronique par rapport à un deuxième signal électronique étant identifié à partir des écarts angulaires identifiés à l'étape A), les signaux électroniques commandant l'intensité des rayons respectifs et à l'étape B), l'impression voulue étant rétablie à partir de l'impression réelle par une variation dans le temps de l'intensité du premier et/ou du deuxième signal électronique au moyen du déphasage identifié.

8. Arrangement de projection, **caractérisé en ce qu'**il est conçu pour mettre en œuvre le procédé selon l'une des revendications précédentes, comprenant
- au moins une première source de rayonnement (100) destinée à générer un premier rayon (110), une deuxième source de rayonnement (200) destinée à générer un deuxième rayon (210) et une source de rayonnement supplémentaire destinée à générer un rayon supplémentaire (310), l'au moins une première (100) et deuxième (200) source de rayonnement comprenant un laser,
- un dispositif de projection (10) destiné à projeter le premier, le deuxième rayon et le rayon supplémentaire sur une surface de projection, une représentation étant projetée sur la surface de projection et le dispositif de projection comprenant un premier miroir (400) et un deuxième miroir (600) destinés à dévier l'au moins un premier (110) et deuxième (210) rayon sur la surface de projection (10),
- une commande électronique (30) pour la première, la deuxième source de rayonnement et la source de rayonnement supplémentaire,
- un arrangement de détection (550) comprenant un premier détecteur (500) et un deuxième détecteur destinés à détecter un écart (d) entre la projection du premier et du deuxième rayon sur la surface de projection,
- l'arrangement de projection étant conçu pour mettre en œuvre le procédé selon l'une des revendications précédentes et étant conçu de telle sorte que la commande électronique pour la première et/ou la deuxième source de rayonnement (100, 200) peut être retardée en fonction de l'écart (d) détecté par l'arrangement de détection (550) entre la projection du premier et du deuxième rayon (110, 210) sur la surface de projection (10) de sorte que l'écart est réduit ou corrigé.
